# EUROPEAN PATENT APPLICATION

(11) **EP 4 782 186 A1**
(43) Date of publication of application: **29.07.2026**
(21) Application number: 25153739.5
(22) Date of filing: 24.01.2025
(51) Int. Cl.: B29C 65/10, B29L 23/20

(54) **METHOD AND MACHINE FOR MERGING A HEAD AND A SLEEVE TO FORM A CONTAINER**

(71) Applicant: Polytype S.A., 1700 Fribourg (CH)
(72) Inventor: Kohlenbrenner, Daniel, 1896 Miex (CH)
(74) Representative: BOVARD AG

(57) **Abstract**

The present invention relates to a method for merging a head (2) and a sleeve (3), wherein, while a mandrel (1) is positioned in either of a first processing position (122) or a second processing position (123), the head (2) and/or the sleeve (3) are being heated and merged, and in that, while the mandrel (1) is positioned in the other processing station of the first processing station (122) or the second processing station (123), the head (2) and/or sleeve (3) are heated and/or cooled down. The invention further relates to a machine (100) for merging a head (2) and a sleeve (3) according to the method of the invention.

## Description

### Technical Field of the Invention

The present invention relates to a method and a machine for merging a head and a sleeve, in particular for producing containers such as tubes, bottles and the like.

### Background of the Invention

A well-known method for the production of containers such as tubes, bottles and the like, includes producing a tube-like so-called sleeve with at least one open face and closing said at least one open face by welding a head to the sleeve. The sleeve and the head are at least partially made of a thermoplastic polymer, for example polyethylene, which, by heating the sleeve and the head, is softened and thus becomes weldable. By bringing the softened head and sleeve in contact with each other or by pressing the softened head and sleeve against each other, for example using a tool, the head is welded to the sleeve. Subsequently the assembly of head and sleeve is cooled down to achieve a dimensionally stable assembly.

It is also well known to not only weld the head to the sleeve but to manipulate the shape of either or both of the head and sleeve in doing so by forcing a shape of the tool onto them. A shape may comprise a certain circularity, curvature, squareness, ovality or the like and/or certain features such as edges, ridges, notches, etc.

Two types of sleeves are widely known, sleeves which are extruded on the one hand and sleeves which are produced from a sheet by well-known methods on the other side. Either type of sleeve can comprise more than one layer, i.e. be a multilayered sleeve.

For the head as well, two major types are known. Either a so-called shoulder is used as a head, and further elements, such as a screw-on cap or a snap-on cap, may be added to said shoulder or a shoulder-less cap is used as a head. A shoulder-less cap thus omits the need for an intermediate element, i.e. the shoulder, and allows for a direct connection of the cap to the sleeve.

In either case however, the sleeve material is usually much thinner than the head material. Sleeves are usually between 0.25 to 0.5 mm in thickness whereas heads usually are between 0.8 to 1.0 mm thick. This difference in thickness can cause issues for the welding process as the sleeve may easily be overheated before the head becomes hot enough to be welded to the sleeve.

Known machines for merging a head and a sleeve comprise multiple processing positions, for example one each for head loading, sleeve loading, heating the head and the sleeve, welding the head to the sleeve, adding further elements such as safety seals or a cap, and unloading of the assembly of welded head and sleeve. However, during the movement from one processing position to the next, particularly during the movement from the processing position for heating the head and the sleeve to the processing position for welding the head to the sleeve, heat is lost, and the head and sleeve cool down to some extent, eventually making them too cold to be welded. The head and the sleeve must therefore be overheated to receive enough heat energy so that they remain weldable until they reach the processing position for welding them, which increases the required energy to conduct the welding operation. Said overheating may further lead to creasing of the sleeve, delamination of two or more layers of a multilayered sleeve and/or damaging of a printed surface of the sleeve. In the foreseeable future, heads and sleeves may further decrease in material thickness as a means to reduce the amount of plastic required for their production. This will further worsen the drawbacks of above-described process as the capability of a material to retain heat decreases with its thickness.

From EP 2 279 072 an assembly head is known, wherein heating of a head and sleeve as well as subsequent welding of said head to said sleeve are conducted in the same processing position. However, this method does require more time than the commonly known method of heating and welding in separate processing positions.

It is therefore an object of the present invention to provide a time-efficient process for merging a head and a sleeve, particularly for a head and a sleeve with a different material thickness.

### Summary of the Invention

According to a first aspect of the invention, there is provided a method for merging a head and a sleeve to form a container, said method comprising:
- providing the head and/or the sleeve, which are loaded onto a mandrel and which mandrel is positionable in at least a first and a second processing position,
- providing heating means for heating the head and/or the sleeve while being loaded onto the mandrel,
- providing a tool for merging the head and sleeve,
- providing cooling means for cooling down the head and/or the sleeve.

Herein, while the mandrel is positioned in either of the first processing position or the second processing position, the head and/or the sleeve are being heated and merged, and in that, while the mandrel is positioned in the other processing position of the first processing position or the second processing position, the head and/or sleeve are heated and/or cooled down.

According to the invention, the mandrel may be positioned in the first processing position, in the second processing position and in further processing positions. The sleeve and head are loaded onto the mandrel, they are therefore also positionable in said first, second and further processing positions.

By distributing the heating, merging, and cooling down of the head and sleeve across at least a first and a second processing position according to the invention, different sequences of the aforementioned processing steps can be conducted. For example, the head and sleeve may be heated and subsequently merged in a second processing position, which is preceded by a first processing position, in which the head and/or the sleeve are pre-heated. As a second example, the head and sleeve may be heated and subsequently merged in a first processing position, which is followed by a second processing position, in which the assembly of head and sleeve is cooled down.

Moreover, said distribution enables to reduce the time, during which the mandrel needs to be positioned in either of the processing positions for the head and/or sleeve to be processed appropriately. The method according to the present invention may thus be carried out in a faster cadence compared to other known methods.

The sleeve and head may have any cross section such as circular, oval, rectangular, or the like. Preferably, the sleeve and head are at least partially cylindrical with a circular cross section.

Preferably the sleeve comprises a first and a second open face, wherein a container is formed by closing at least the first or the second open face by merging the head and the sleeve using the method according to the present invention. The container may be used as a receptacle for fluids, such as liquids, pastes, creams, etc. or for solids, such as powders, granules, pallets, etc.

For the sake of this application, the term merging shall not be interpreted as being limiting, as merging may comprise welding of the head to the sleeve with and without pressing the head and the sleeve together as well as with and without changing the shape of either or both of the head and sleeve depending on the tool that is used. Merging may for example also include attaching or glueing the head to the sleeve with or without pressing the head and the sleeve together and using a heat sensitive or non-heat sensitive adhesive.

In an advantageous embodiment of the invention, the method further comprises providing alignment means for aligning the sleeve and the head to each other while loaded onto the mandrel and, in that the sleeve and the head are being aligned to each other while the mandrel is positioned in the first processing position, the second processing position or a third processing position.

Alignment of the head and sleeve to each other comprises adjusting their relative position with respect to each other in either the longitudinal direction of the mandrel, in the circumferential direction of the mandrel, or both. The head and sleeve may be aligned to each other in a way that they are arranged with a predetermined distance in the longitudinal direction of the mandrel between them or, preferably, in a way that they overlap along a predetermined length. The head and sleeve may also be aligned to each other in a way that certain features, for example visual or haptic markers, of the head and sleeve align.

The sleeve and head may be aligned to each other before or after heating of the sleeve and/or head or between multiple heating steps. Preferably, the head and/or sleeve can be aligned to each other after either or both of the head and sleeve have been pre-heated.

In a further advantageous embodiment of the invention, the head and/or shoulder are being cooled and merged simultaneously. By premature removing the tool, i.e. removing the tool while the head and/or sleeve are still at a weldable temperature, the head and sleeve may detach from each other. Simultaneous cooling and merging of the head and sleeve ensure that the process of merging the head and the sleeve is carried out until the head and sleeve are cold enough to not detach from each other anymore.

In another embodiment of the invention, the mandrel is positioned consecutively in the first processing position and in the second processing position. In doing so, the time between the steps of merging the head and the sleeve in either of the first or second processing position and heating and/or cooling the head and/or sleeve in the other of the first or second processing position can be minimized. Hence, the risk for e.g. creasing of the sleeve is minimized.

According to a further embodiment of the invention, while the mandrel is positioned in the first processing position, only the head is being heated, and, while the mandrel is positioned in the second processing position, the head and/or the sleeve are being heated. This enables a pre-heating of the head without overheating the sleeve and is particularly beneficial, when the head's material is much thicker than the sleeve's material.

In another embodiment of the invention, the material thickness of the head is at least double the material thickness of the sleeve. Preferably, the sleeve is 0.4 mm thick or less and the head's thickness is 0.8 mm or more.

In a preferable embodiment of the invention, the sleeve is an extruded sleeve or a laminated sleeve.

According to yet another embodiment of the invention, the head comprises a shoulder or is a shoulder-less cap.

According to a second aspect of the invention, there is provided a machine for merging a head and a sleeve to form a container, said machine comprising:
- at least one mandrel extending along a longitudinal axis on which at least one mandrel the head and/or the sleeve may be loaded and which at least mandrel is positionable in at least a first processing position and a second processing position,
- positioning means for positioning the mandrel in the at least first or second processing position,
- heating means for heating the head and/or the sleeve while being loaded on the mandrel,
- at least one tool for merging the head and the sleeve,
- cooling means for cooling down the head and/or the sleeve while being loaded on the mandrel.
wherein the at least one tool is provided to merge the head and the sleeve and the cooling means are provided to cool down the head and/or the sleeve while the mandrel is positioned in the first processing position or in the second processing position, and wherein the heating means are provided to heat the head and/or the sleeve while the mandrel is positioned in the first processing position and in the second processing position.

The heating means may be provided to heat the head and/or the sleeve while the mandrel is positioned in either of the first processing position or the second processing position or the heating means may be provided as first and second heating means, wherein the first heating means are provided to heat the head and/or sleeve while the mandrel is positioned in the first processing station and the second heating means are provided to heat the head and/or sleeve while the mandrel is positioned in the second processing station.

Preferably, the heating means are designed to generate and feed a hot gas stream, preferably a hot air stream, onto the head and/or sleeve. They may comprise channels, tunnels, funnels, nozzles, orifices, etc. to direct and focus the hot gas stream onto the head and/or sleeve. Alternatively, the heating means may be provided as high frequency or inductive heating means, which interact with a metallic portion within the head and/or sleeve for heating up the head and/or sleeve.

Equally preferably, the at least one tool may be provided as a ring-shaped tool with a central orifice complementary to the shape of the mandrel, which tool may receive the loaded mandrel in said central orifice, wherein the head and sleeve are merged by being pressed between the mandrel and the tool. The tool may also serve as cooling means by cooling the head and/or sleeve through conduction. The cooling means may additionally or alternatively be provided separately from the tool, for example as cooling fans. The tool may also be provided as an air pressure tool, preferably a ring-shaped air pressure tool, wherein pressurized air may be directed onto the heated head and/or sleeve with a predetermined pressure for merging the head and the sleeve. Said pressurized air may be warm or hot for keeping the head and/or sleeve in a soft and weldable state or the pressurized air may be cold for serving as a cooling means.

The machine according to the invention may comprise multiple mandrels to enable simultaneous merging of multiple heads and one sleeve each. The multiple mandrels may be arranged in a way, that at least a first mandrel or a first set of mandrels, preferably a first set of three mandrels, is positioned in the first processing station and at least a second mandrel or a second set of mandrels, preferably a second set of three mandrels, is positioned in the second processing station at the same time.

In an embodiment of the invention, the cooling means are provided to cool down the head and/or the sleeve while the mandrel is positioned in the first processing position and in the second processing position. The cooling means may be provided to cool the head and/or the sleeve while the mandrel is positioned in the first processing position and in the second processing position or the cooling means may be provided as first and second cooling means, wherein the first cooling means are provided to cool the head and/or sleeve while the mandrel is positioned in the first processing position and the second cooling means are provided to cool the head and/or sleeve while the mandrel is positioned in the second processing position.

In another embodiment of the invention, the machine comprises at least a first tool and a second tool, wherein the first tool is provided to merge the head and the sleeve while the mandrel is positioned in the first processing position and the second tool is provided to merge the head and the sleeve while the mandrel is positioned in the second processing position. Further tools may be provided to merge the head and the sleeve while the mandrel is positioned in a further processing position.

In yet another embodiment of the invention, the machine further comprises alignment means for aligning the sleeve and the head to each other while loaded onto the mandrel. The aligning means may comprise grippers, claws, rollers, etc. and preferably act on the sleeve while the head remains in a constant position on the mandrel.

In a further embodiment of the invention, the alignment means are provided to move the sleeve and/or the head, when loaded on the mandrel, relative to said mandrel along its longitudinal axis. For example, the sleeve can be moved away from the head along the longitudinal axis of the mandrel and the head can be heated without the sleeve being affected by that heat. Subsequently the sleeve can be moved back towards the head and the head and the sleeve can be merged.

According to another preferred embodiment of the invention, the positioning means are provided to rotate the at least one mandrel about a central axis, which central axis is essentially perpendicular to the longitudinal axis of the mandrel. In this embodiment, at least the first processing position and the second processing position are provided in a circle around the central axis and the at least one mandrel may be turned clockwise or counterclockwise about the central axis by means of the positioning means and is, during said turning movement, positioned in the first processing position and the second processing position. Preferably, said turning movement is a stepwise, so-called indexable, movement, even more preferably an indexable movement with 8 indexes, wherein the first and second processing positions represent one index each.

### Brief Description of the Drawings

Preferred embodiments of the invention are now described in more detail with reference to the enclosed drawings, given by way of non-limiting example, wherein:
Figure 1 shows a schematic top view of a first embodiment,
Figure 2 shows a schematic top view of a second embodiment
Figure 3 shows a cross section of a third embodiment,
Figure 4 shows another cross section of the third embodiment,
▪Figure 5 shows a cross section of a fourth embodiment,
Figure 6 shows another cross section of the fourth embodiment,
▪Figure 7 shows a third cross section of the fourth embodiment, and
▪Figure 8 shows a cross section of a fifth embodiment.

### Detailed Description of the Illustrated Embodiments

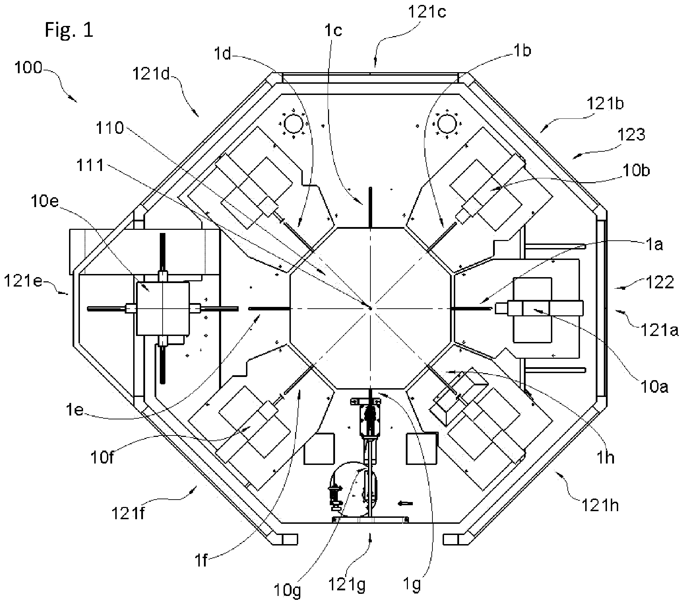

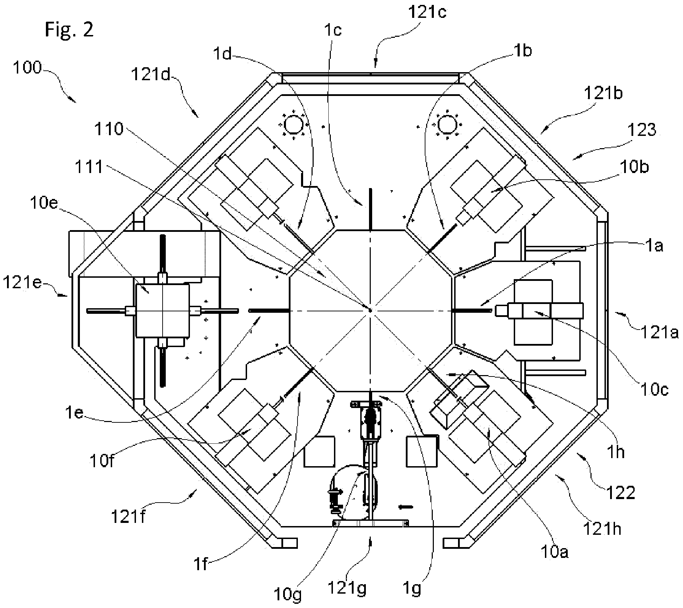

The method 1000 for merging a head 2 and a sleeve 3 according to the invention will be explained with reference to the embodiments of the machine 100 for merging a head 2 and a sleeve 3 as illustrated in figures 1 and 2.

The machine 100 comprises positioning means 110, which are provided to rotate the mandrels 1a to 1h about the central axis 111 in an indexable manner. Every index represents a processing position 121a to 121h, that is, by rotating the mandrels 1a to 1h about the central axis 111, said mandrels 1a to 1h are positioned in one processing position after the other, in particular in the first processing position 121a and the second processing position 121b. The head 2 is loaded onto mandrel 1a in processing position 121f using the head loading tool 10f and the sleeve 3 is loaded onto the mandrel 1a in processing position 121g using the sleeve loading tool 10g.

The first processing station 10a is provided in the processing position 121a, which thus serves as first processing position 122, and comprises first heating means, and a first combined cooling means and tool (not shown), and the second processing station 10b is provided in the processing position 121b, which thus serves as second processing position 123, and comprises second heating means, and a second combined cooling means and tool (not shown). While the mandrel 1a is positioned in the processing position 121a, only the head 2 is heated by the first heating means of the first processing station 10a. The mandrel 1a is then positioned in the processing position 121b through rotation of the mandrels about the central axis 111. While positioned in the processing position 121b, the head 2 and the sleeve 3 are heated using the second heating means of the second processing station 10b and subsequently merged using the second combined cooling means and tool of the second processing station 10b. During merging of the head 2 and the sleeve 3, no heat is applied to the head 2 and/or sleeve 3 anymore but they are cooled conductively by the second combined cooling means and tool of the second processing station 10b.

The machine 100 is set up in a modular manner, hence, alternatively to the above and as shown in figure 2, it is possible to e.g. provide the first processing station 10a in the processing position 121h, which then serves as first processing position 122, and to provide aligning means 10c in processing position 121a.

The head 2 is loaded onto mandrel 1a in processing position 121f using the head loading tool 10f and the sleeve 3 is loaded onto the mandrel 1a in processing position 121g using the sleeve loading tool 10g. Upon loading of the sleeve 3 it is placed in a distance to the head 2 on the mandrel 1a. The head 2 may be pre-warmed before or during the loading onto the mandrel 1a by pre-warming means (not shown).

The mandrel 1a may then be positioned in the processing position 121h and while the mandrel 1a is positioned in the processing position 121h, only the head 2 is heated by the first heating means of the first processing station 10a. The mandrel 1a is then positioned in the processing position 121a through rotation of the mandrels about the central axis 111 and while positioned in the processing position 121a, the aligning means 10c align the head 2 and the sleeve 3 to each other so that they overlap along a predetermined length. Subsequently, the mandrel 1a is positioned in the processing position 121b, wherein, while positioned in the processing position 121b, the head 2 and the sleeve 3 are heated using the second heating means of the second processing station 10b and subsequently merged using the second combined cooling means and tool of the second processing station 10b. During merging of the head 2 and the sleeve 3, no heat is applied to the head 2 and/or sleeve 3 anymore but they are cooled conductively by the second combined cooling means and tool of the second processing station 10b.

Although presently described with reference to the head 2 and sleeve 3 loaded onto the mandrel 1a, the method 1000 may also be conducted for further heads and sleeves loaded onto the mandrels 1b to 1h by positioning them in the first and second processing positions.

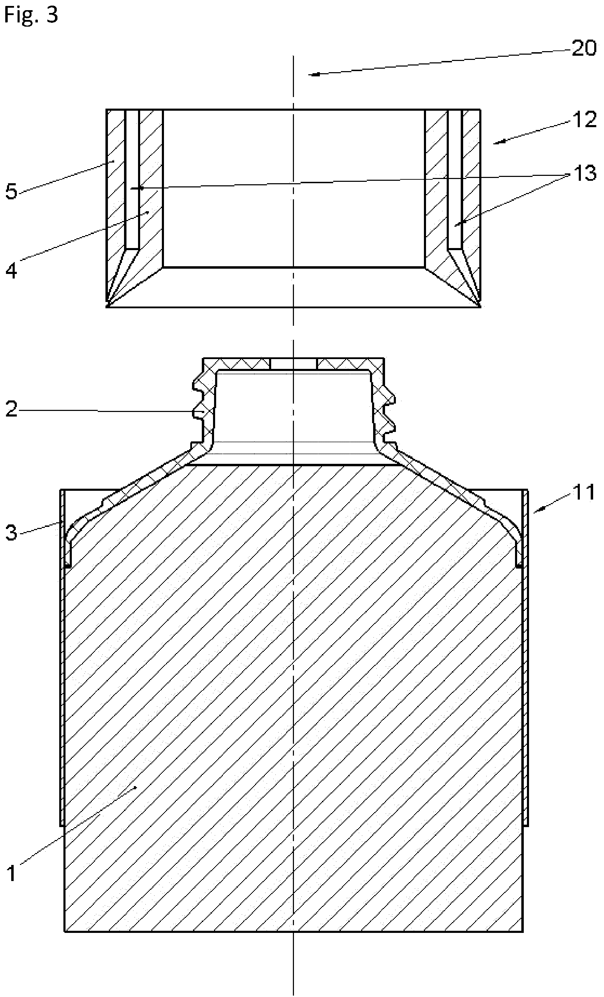

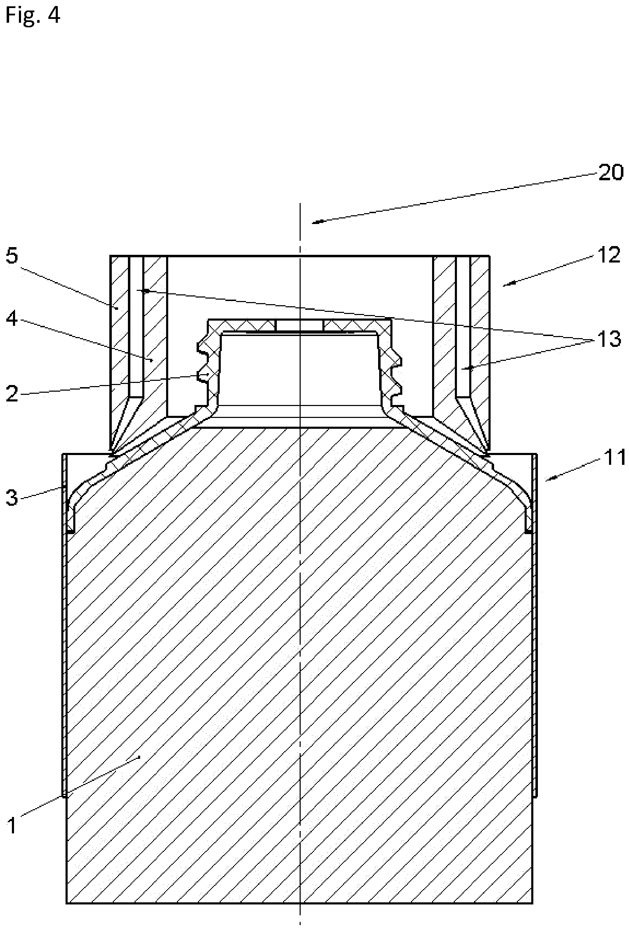

Figures 3 and 4 show the head 2 and sleeve 3 loaded onto the mandrel 1. The head 2 and sleeve 3 are aligned to each other to overlap along a predetermined length thus forming the overlapping part 11. Further shown is the heating means 12 comprising an inner tube 4 and an outer tube 5, wherein the inner tube 4 is concentrically arranged within the outer tube 5 and between the inner tube 4 and the outer tube 5 remains a channel 13, which channel 13 can be used to feed a hot gas stream onto the head 2 and/or the sleeve 3. The outlet of the channel 13 is angled towards the overlapping part 11.

In a passive position as shown in figure 3, the heating means 12 are distanced from the mandrel 1, head 2 and sleeve 3 along the longitudinal axis 20 of the mandrel 1 to enable the rotation of the mandrel 1 about the central axis (not shown). For heating the head 2 and the sleeve 3, the heating means 12 can be moved along the longitudinal axis 20 into a heating position as shown in figure 4. In the heating position, the heating means 12, particularly the outlet of the channel 13, are arranged in the vicinity of the head 2 and/or sleeve 3.

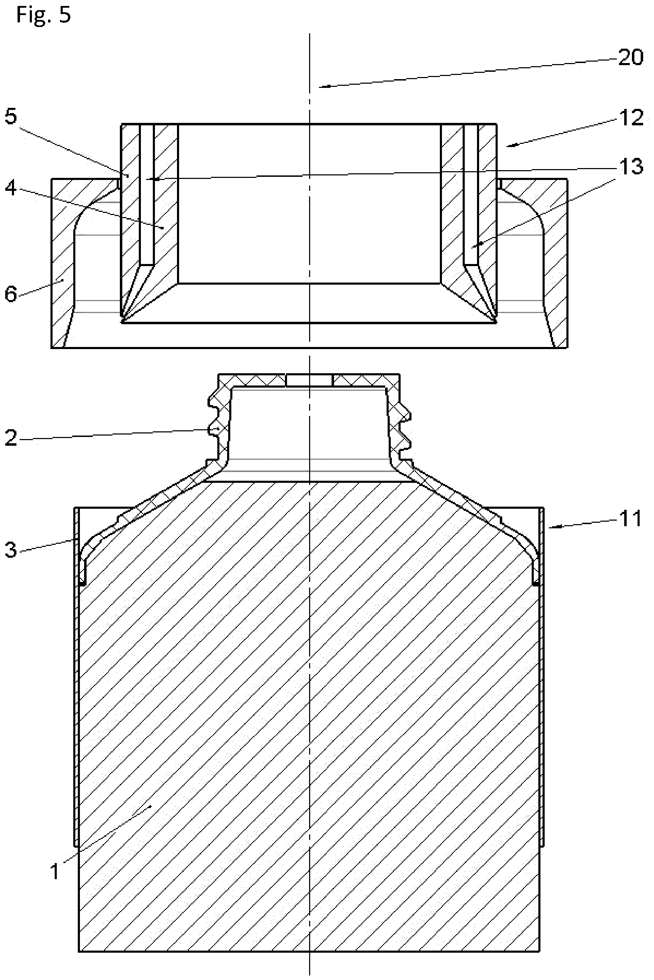

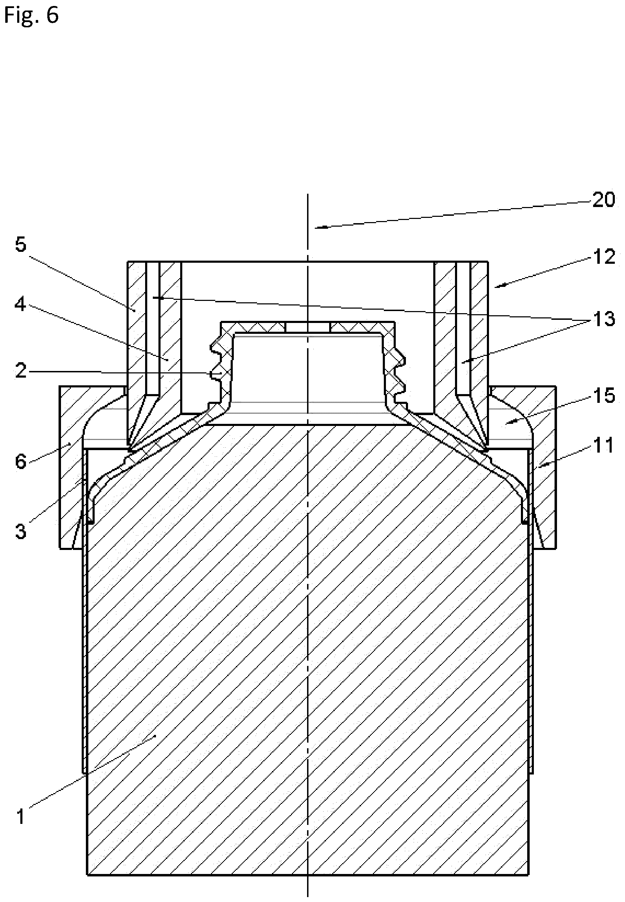

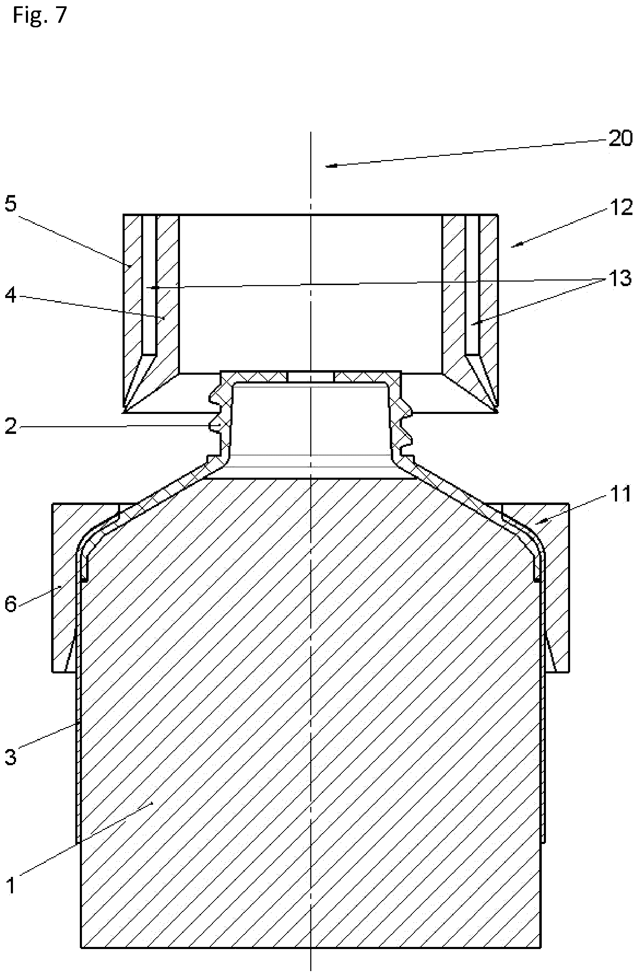

Figure 5 shows the mandrel 1, head 2, sleeve 3, heating means 12 and tool 6 in a passive position. The tool 6 is concentrically arranged around the heating means 12. In the heating position as shown in figure 6 the heating means 12, particularly the outlet of the channel 13, are arranged in the vicinity of the head 2 and/or sleeve 3. The tool 6 encloses the overlapping part 11 thus forming a cavity 15 between the mandrel 1, heating means 12 and tool 6. A hot gas stream may be fed into said cavity 15 through the channel 13 to heat up the head 2 and sleeve 3. By further moving the tool 6 along the longitudinal axis 20 in a merging position as shown in figure 7, the tool 6 presses the head 2 and sleeve 3 against each other and against the mandrel 1, thus merging the head 2 and the sleeve 3. The tool 6 simultaneously cools down the head 2 and the sleeve 3. The heating means 12 may remain in the heating position or may be moved away from the mandrel 1 along the longitudinal axis 20 as shown in figure 7.

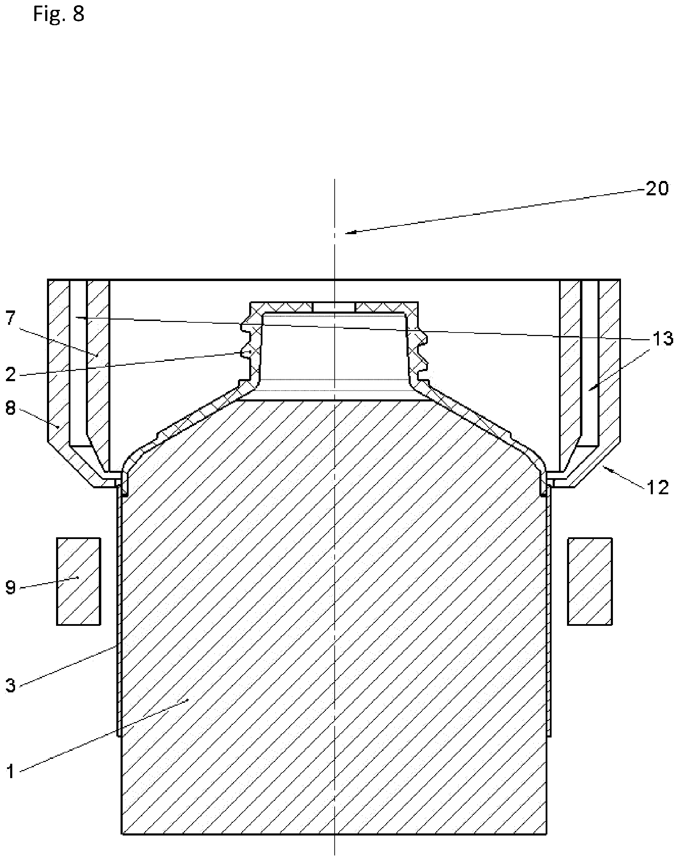

Figure 8 shows another version of the heating means 12, wherein the heating means 12 enclose the head 2 and/or the sleeve 3 and the outlet of the channel 13 is essentially perpendicular to the longitudinal axis 20. This version of the heating means 12 as well may be moved along the longitudinal axis 20 from a passive position into a heating position or vice versa. Figure 8 further shows the gripping elements 9, which may be used for gripping the sleeve 3 and moving it on the mandrel 1 along the longitudinal axis 20. The gripping elements 9 are connected to the aligning means (not shown).

## Claims

1. A method (1000) for merging a head (2) and a sleeve (3) to form a container, said method (1000) comprising:
• providing the head (2) and/or the sleeve (3), which are loaded onto a mandrel (1) and which mandrel (1) is positionable in at least a first processing position (122) and a second processing position (123),
• providing heating means (12) for heating the head (2) and/or the sleeve (3) while being loaded onto the mandrel (1),
• providing a tool (6) for merging the head (2) and the sleeve (3),
• providing cooling means for cooling down the head (2) and/or the sleeve (3),
**characterized in that**, while the mandrel (1) is positioned in either of the first processing position (122) or the second processing position (123), the head (2) and/or the sleeve (3) are being heated and merged,
and **in that**, while the mandrel (1) is positioned in the other processing position of the first processing position (122) or the second processing position (123), the head (2) and/or sleeve (3) are heated and/or cooled down.

2. The method (1000) according to claim 1, **characterized in that** the method (1000) further comprises providing alignment means for aligning the sleeve (3) and the head (2) to each other while loaded onto the mandrel (1) and, **in that** the sleeve (3) and the head (2) are being aligned to each other while the mandrel (1) is positioned in the first processing position (122), the second processing position (123) or a third processing position.

3. The method (1000) according to claim 1 or 2, **characterized in that** the head (2) and/or shoulder (3) are being cooled and merged simultaneously.

4. The method (1000) according to any of the preceding claims, **characterized in that** the mandrel (1) is positioned consecutively in the first processing position (122) and in the second processing position (123).

5. The method (1000) according to any of the preceding claims, **characterized in that**, while the mandrel (1) is positioned in the first processing position (122), only the head (2) is being heated, and, while the mandrel (1) is positioned in the second processing position (123), the head (2) and/or the sleeve (3) are being heated.

6. The method (1000) according to any of the preceding claims, **characterized in that** the material thickness of the head (2) is at least double the material thickness of the sleeve (3).

7. The method (1000) according to any of the preceding claims, **characterized in that** the sleeve (3) is an extruded sleeve or a laminated sleeve.

8. The method (1000) according to any of the preceding claims, **characterized in that** the head (2) comprises a shoulder or is a shoulder-less cap.

9. A machine (100) for merging a head (2) and a sleeve (3) to form a container, said machine (100) comprising:
• at least one mandrel (1) extending along a longitudinal axis (20) on which at least one mandrel (1) the head (2) and/or the sleeve (3) may be loaded and which at least mandrel (1) is positionable in at least a first processing position (122) and a second processing position (123),
• positioning means (110) for positioning the mandrel (1) in the at least first or second processing position (122, 123),
• heating means (12) for heating the head (2) and/or the sleeve (3) while being loaded on the mandrel (1),
• at least one tool (6) for merging the head (2) and the sleeve (3) while loaded onto the mandrel (1),
• cooling means for cooling down the head (2) and/or the sleeve (3), while being loaded on the mandrel (1),
wherein the at least one tool (6) is provided to merge the head (2) and the sleeve (3), and the cooling means are provided to cool down the head (2) and/or the sleeve (3) while the mandrel (1) is positioned in the first processing position (122) or in the second processing position (123),
**characterized in that** the heating means (12) are provided to heat the head (2) and/or the sleeve (3) while the mandrel (1) is positioned in the first processing position (122) and in the second processing position (123).

10. The machine (100) according to claim 9, **characterized in that** the cooling means (14) are provided to cool down the head (2) and/or the sleeve (3) while the mandrel (1) is positioned in the first processing position (122) and in the second processing position (123).

11. The machine (100) according to claim 9 or 10, **characterized in that** the machine (100) comprises at least a first tool and a tool, wherein the first tool is provided to merge the head (2) and the sleeve (3) while the mandrel (1) is positioned in the first processing position (122) and the second tool is provided to merge the head (2) and the sleeve (3) while the mandrel (1) is positioned in the second processing position (123).

12. The machine (100) according to claim 9, 10 or 11, **characterized in that** it further comprises alignment means for aligning the sleeve (2) and the head (3) to each other while loaded onto the mandrel (1).

13. The machine (100) according to claim 12, **characterized in that** the alignment means are provided to move the sleeve (3) and/or the head (2), when loaded on the mandrel (1), relative to said mandrel (1) along its longitudinal axis (20).

14. The machine (100) according to any of the claims 9 to 13, **characterized in that** the positioning means (110) are provided to rotate the at least one mandrel (1) about a central axis (111), which central axis (111) is essentially perpendicular to the longitudinal axis (20) of the mandrel (1).
